# EUROPÄISCHE PATENTSCHRIFT

(11) **EP 3 995 320 B1**
(45) Veröffentlichungstag und Bekanntmachung des Hinweises auf die Patenterteilung: **02.09.2026**
(21) Anmeldenummer: 20206372.3
(22) Anmeldetag: 09.11.2020
(51) Int. Cl.: B60C 1/00, C08K 3/36, C08K 9/06, C08J 3/20, C09C 3/00, C09C 3/04, C09C 3/12, C09C 1/30

(54) **ENERGIEEFFIZIENTES LÖSUNGSMITTELFREIES VERFAHREN ZUR ORGANOSILANISIERUNG VON SILIKAT- UND SILICIUMDIOXID-MATERIALIEN**
ENERGY-EFFICIENT SOLVENT-FREE PROCESS FOR ORGANOSILANIZATION OF SILICATE AND SILICON DIOXIDE MATERIALS
PROCÉDÉ SANS SOLVANT À EFFICACITÉ ÉNERGÉTIQUE POUR L'ORGANOSILANISATION DES MATÉRIAUX DE SILICATE ET DE DIOXYDE DE SILICIUM

(43) Veröffentlichungstag der Anmeldung: 11.05.2022
(73) Patentinhaber: Continental Reifen Deutschland GmbH, 30175 Hannover (DE)
(72) Erfinder: Strohmeier, Julian, 30419 Hannover (DE); Dauer, David-Raphael, 30419 Hannover (DE); Jacob, Andreas, 30419 Hannover (DE); Davin, Julien, 30419 Hannover (DE); Kaufmann, Dieter E., 38640 Goslar (DE); Namyslo, Jan C., 37412 Herzberg (DE); Wawrzinek, Birgit, 38678 Clausthal-Zellerfeld (DE); Florescu, Roman, 38642 Goslar (DE)
(74) Vertreter: Continental Corporation

(56) Entgegenhaltungen:
- EP-A2- 1 607 448
- EP-A2- 2 301 667
- DE-T2- 69 203 643
- GB-A- 2 179 268

## Beschreibung

Die Erfindung betrifft ein Verfahren zur Organosilanisierung von Siliciumdioxid und/oder anorganischen Silikaten, ein Verfahren zur Herstellung einer Kautschukmischung, ein Verfahren zur Herstellung eines Vulkanisats oder Kautschukprodukts umfassend das Vulkanisat sowie die Verwendung einer Mahlvorrichtung zur energieeffizienten, lösungsmittelfreien Organosilanisierung.

Offenbart wird zudem eine Zusammensetzung umfassend mindestens eine organosilanisierte Verbindung, eine Kautschukmischung, umfassend eine entsprechende Zusammensetzung, ein Vulkanisat, hergestellt oder herstellbar durch Vulkanisation dieser Kautschukmischung sowie ein Kautschukprodukt umfassend das entsprechende Vulkanisat.

Der Gegenstand der Erfindung ist in den beigefügten Ansprüchen definiert.

Die Automobilindustrie gehört zu den Industriezweigen, die seit Beginn des 21. Jahrhunderts mit fundamentalen Herausforderungen konfrontiert und gleichzeitig von zahlreichen technologischen Innovationen geprägt wurden. Das wachsende Kundenbewusstsein für ökologische Aspekte wie Emissionsprofile oder Ressourceneffizienz erfordert neue Konzepte für die Mobilität. Gleichzeitig steigen die Nachfrage nach verbesserten Leistungsmerkmalen der Fahrzeuge sowie die Anforderungen in Bezug auf die Fahrsicherheit. Diesen Herausforderungen zu begegnen, ist nicht nur eine Aufgabe der eigentlichen Fahrzeughersteller. In der Praxis werden viele dieser Aspekte nämlich stark von den Eigenschaften der Reifen beeinflusst, so dass die Optimierung der Reifeneigenschaften ein wichtiges Innovationsfeld ist.

Mehrere relevante Eigenschaften von Fahrzeugluftreifen, z.B. Rollwiderstand und Nasshaftung, sind eng mit der Gummizusammensetzung der Lauffläche verbunden. Daher konzentrieren sich viele Forschungsanstrengungen auf die Optimierung der Eigenschaften der Kautschukzusammensetzung und deren Zusätze.

In den letzten Jahrzehnten wurden auf diesem Gebiet bedeutende Fortschritte erzielt. Eine zentrale Innovation war hierbei der zumindest teilweise Ersatz von Rußfüllstoffen durch siliciumhaltige Verbindungen, insbesondere Siliciumdioxid-Verbindungen, wie beispielsweise pyrogene Kieselsäure, oder Silikate. Es hat sich gezeigt, dass besonders günstige Eigenschaften erhalten werden können, wenn die siliciumhaltigen Verbindungen auf ihrer Oberfläche durch Organosilanisierung, die auch als Organosilylierung bezeichnet wird, modifiziert werden. Hierfür werden die siliciumhaltigen Verbindungen mit organyloxysilylorganischen Verbindungen umgesetzt, d.h. mit Verbindungen, die zumindest eine C-O-Si-Bindung und zumindest einen durch eine Si-C-Bindung angebundenen organischen Rest aufweisen. Im Zuge der chemischen Umsetzung, bei der es sich üblicherweise um eine Kondensationsreaktion handelt, entsteht an der Grenzfläche der siliciumhaltigen Verbindungen eine Modifizierung mit dem organischen Rest der organyloxysilylorganischen Verbindungen. Durch diesen organischen Rest kann die Kompatibilität der Füllstoffe in der Kautschukmischung und die Wechselwirkungen mit dem Kautschuk gezielt beeinflusst werden. Hierbei ist es in vielen Fällen bevorzugt, wenn die organischen Reste funktionelle Gruppen tragen, die im Zuge der Vulkanisation mit der Kautschukmischung vernetzen können und somit den Vernetzungsgrad im Vulkanisat erhöhen. Dieses Prinzip wird beispielsweise in der DE 2536674 C3 oder der DE 2255577 C3 offenbart.

Aus dem Stand der Technik sind Mahlverfahren bekannt, mit denen oberflächenmodifizierte Substanzen erhalten werden können, bei denen die Oberflächenmodifizierung potentiell als chemische und/oder physikalische Anbindung von organischen Komponenten an die Oberfläche der Substanzen erfolgen kann. Die EP 1 607 448 A2 offenbart insoweit beispielsweise die Herstellung von oberflächenmodifizierten Silicagelen, wobei für die Modifikation Polymere eingesetzt werden. Die GB 2179268 A betrifft die Zerkleinerung von Materialien im trockenen Zustand, wobei in einigen Ausführungsformen neben den zu zerkleinernden Materialien oberflächenaktive Substanzen eingesetzt werden können. Weitere mit dem Mahlen von anorganischen Substanzen im Zusammenhang stehende Offenbarungen finden sich beispielsweise in der EP 2 301 667 A2 und der DE 69203643 T2.

In der Praxis findet die Organosilanisierung, d.h. die Anbindung der organyloxysilylorganischen Verbindungen an die siliciumhaltigen Verbindungen, in der Reifenindustrie zumeist durch eine in situ Reaktion im Mischer statt. Dies bedeutet, dass die Komponenten, beispielsweise Silica und ein freies Silan mit organischem Rest, erst im Mischer und in Gegenwart gebräuchlicher Chemikalien für Kautschukmischungen zur Reaktion gebracht werden. Dieser Prozess wird jedoch regelmäßig als nachteilig empfunden, da dabei brennbare und potentiell gesundheitsschädliche Gase, bspw. Ethanol, freigesetzt werden können, was in der Kautschukverarbeitung regelmäßig unerwünscht ist. Darüber hinaus ist ein gesonderter Mischschritt nötig, wodurch der für das Verfahren benötigte Zeit- und Energieaufwand steigt. Zusätzlich ist der entsprechende Prozess vergleichsweise schwer zu kontrollieren, da die Reaktion in situ in einem großen Volumen und in Gegenwart anderer Substanzen erfolgt, unerwünschte Reaktionsprodukte wie Ethanol aus der Kautschukmischung entfernt werden müssen und der Grad der Organosilanisierung, d.h. der Erfolg der beabsichtigten in situ Reaktion, nur schwer ermittelt werden kann.

Aus diesem Grund gibt es im Stand der Technik den Ansatz, die siliciumhaltigen Verbindungen im Vorfeld durch Organosilanisierung zu modifizieren. Hierdurch können die späteren Füllstoffe mit einem wohldefinierten Silanisierungsgrad erhalten und der Kautschukmischung zugesetzt werden, ohne dass es im Mischer hierdurch zu einer Bildung von flüchtigen organischen Substanzen kommt.

Diese vorgelagerte Organosilanisierung erfolgt heutzutage in einem nasschemischen Verfahren, d.h. unter Verwendung von Lösungsmitteln und in einem vergleichsweise langwierigen Verfahren. Alternativ kann die großtechnische Herstellung auch im Überdruckverfahren, d.h. beispielsweise mittels überkritischem CO₂ als Lösungsmittel, erfolgen, vgl. EP 1357156 B1. Die auf diese Weise erzeugten organosilanisierten Verbindungen müssen nach der nasschemischen Umsetzung zwecks Reingewinnung von dem flüssigen Reaktionsmedium abgetrennt und anschließend getrocknet werden, wofür neben erhöhten Temperaturen regelmäßig auch reduzierte Drücke benötigt werden, wodurch die Energieeffizienz des Verfahrens regelmäßig niedrig und der Arbeitsaufwand hoch ist.

Die übergeordnete Aufgabe der Erfindung war es, ein Verfahren zur Organosilanisierung von Siliciumdioxid und/oder anorganischen Silikaten anzugeben, welches die vorstehend beschriebenen Nachteile des Standes der Technik behebt oder zumindest vermindert.

Insbesondere war es eine Aufgabe der vorliegenden Erfindung, ein Verfahren zur Organosilanisierung von Siliciumdioxid und/oder anorganischen Silikaten anzugeben, welches es ermöglicht, die vorgelagerte Organosilanisierung besonders energieeffizient durchzuführen.

Hierbei war es eine Aufgabe der vorliegenden Erfindung, Verfahren zur Organosilanisierung von Siliciumdioxid und/oder anorganischen Silikaten anzugeben, welches weitgehend, bevorzugt vollständig, ohne den Einsatz von Lösungsmitteln auskommt. Dabei war es wünschenswert, dass das anzugebende Verfahren auch vollständig mit festen Ausgangsmaterialien durchführbar sein sollte.

Idealerweise sollte das anzugebende Verfahren dabei organosilanisierte Verbindungen mit hoher Ausbeute und hoher Selektivität bereitstellen können, insbesondere frei von thermischen Zersetzungsprodukten der Ausgangsmaterialien. Hierbei war es eine Vorgabe, dass das anzugebende Verfahren die organosilanisierten Verbindungen vorzugsweise in besonderer Reinheit, insbesondere frei von metallischen Verunreinigungen, welche beispielsweise durch Abrieb von den verwendeten Vorrichtungen auftreten können, bereitstellen sollte.

Es war eine ergänzende Aufgabe der vorliegenden Erfindung, dass das anzugebende Verfahren ohne den Einsatz zusätzlicher Chemikalien, insbesondere ohne den Einsatz potentiell gesundheitsschädlicher Verbindungen auskommen und möglichst wenig Abfälle, wie beispielsweise Lösungsmittel oder nicht angebundenes Silan, produzieren sollte. Entsprechend sollte das anzugebende Verfahren idealerweise eine hohe Betriebssicherheit aufweisen, wartungsarm sein und möglichst wenig Verschleißteile erfordern.

Die Erfinder der vorliegenden Erfindung haben nunmehr erkannt, dass sich die vorstehend beschriebenen Aufgaben lösen lassen, wenn die Organosilanisierung statt in einer nasschemischen Reaktion durch eine sogenannte Reaktionsmahlung erfolgt, wie sie in den Ansprüchen definiert ist, bei der die Ausgangsverbindungen in einer Ausgangszusammensetzung vorgelegt werden und die Organosilanisierung durch intensive mechanische Beanspruchung der Ausgangszusammensetzung in einer Mahlvorrichtung verursacht wird. Hierbei haben die Erfinder erkannt, dass besonders vorteilhafte Ergebnisse erzielt werden können, wenn als Mahlvorrichtung eine Fließbett-Gegenstrahlmühle eingesetzt wird.

Die vorstehend genannten Aufgaben werden entsprechend durch ein Verfahren zur Organosilanisierung von Siliciumdioxid und/oder anorganischen Silikaten und entsprechende Weiterverarbeitungen gelöst, wie sie in den Ansprüchen definiert sind. Bevorzugte erfindungsgemäße Ausgestaltungen ergeben sich aus den Unteransprüchen und den nachfolgenden Ausführungen.

Solche Merkmale erfindungsgemäßer Verfahren, die nachfolgend als bevorzugt bezeichnet sind, werden in besonders bevorzugten Ausführungsformen mit anderen als bevorzugt bezeichneten Merkmalen kombiniert. Ganz besonders bevorzugt sind somit Kombinationen von zwei oder mehr der nachfolgend als besonders bevorzugt bezeichneten Verfahren. Merkmale bevorzugter Zusammensetzungen, Kautschukmischungen, Vulkanisate, Kautschukprodukte und Verwendungen ergeben sich aus den Merkmalen bevorzugter Verfahren.

Die Erfindung betrifft ein Verfahren zur Organosilanisierung von Siliciumdioxid und/oder anorganischen Silikaten, umfassend die Schritte:
a) Herstellen oder Bereitstellen einer Ausgangszusammensetzung umfassend
   zumindest eine erste Verbindung, ausgewählt aus der Gruppe bestehend aus Siliciumdioxid und anorganischen Silikaten, sowie
   zumindest eine zweite Verbindung, ausgewählt aus der Gruppe bestehend aus organyloxysilylorganischen Verbindungen, und
b) mechanisches Beanspruchen der Ausgangszusammensetzung in einer Mahlvorrichtung zur mechanischen Aktivierung der ersten und/oder zweiten Verbindung,
wobei das mechanische Beanspruchen so erfolgt, dass infolge der mechanischen Beanspruchung eine Organosilanisierung der ersten Verbindung durch die zweite Verbindung erfolgt, so dass eine organosilanisierte Verbindung erhalten wird.

**In** dem erfindungsgemäßen Verfahren wird zunächst die Ausgangszusammensetzung hergestellt oder bereitgestellt. Dies bedeutet, dass die Ausgangszusammensetzung entweder in einem vorangehenden Schritt hergestellt wird, beispielsweise durch Vermischen der ggf. separat hergestellten Einzelkomponenten, oder lediglich bereitgestellt wird, beispielsweise, indem die Ausgangszusammensetzung von einem Lieferanten zugekauft wird.

Die Ausgangszusammensetzung umfasst erfindungsgemäß zumindest eine erste Verbindung sowie zumindest eine zweite Verbindung. Dies bedeutet, dass die Ausgangszusammensetzung auch zwei oder mehr erste Verbindungen und/oder zwei oder mehr zweite Verbindungen umfassen kann, was für bestimmte Anwendungen bevorzugt sein kann.

Der Fachmann erkennt, dass das erfindungsgemäße Verfahren nicht für sämtliche siliciumhaltigen Materialien geeignet ist. Stattdessen kommen als erste Verbindung, also für die Verbindungen, die an ihrer Grenzschicht organosilanisiert werden sollen, solche anorganischen Verbindungen in Betracht, die oxidisches Silicium bzw. Si-O-Si-Verknüpfungen umfassen. Die erste Verbindung ist daher ausgewählt aus der Gruppe bestehend aus Siliciumdioxid und anorganischen Silikaten. Hierbei ist die Anwendbarkeit des erfindungsgemäßen Verfahrens insbesondere nicht hinsichtlich der strukturellen Modifikation beschränkt, in der die oxidischen SiliciumVerbindungen vorliegen. Entsprechend lässt sich das erfindungsgemäße Verfahren insbesondere für sämtliche Formen des Siliciumdioxids ausführen, beispielsweise amorphes Siliciumdioxid, wie beispielsweise Geyserit oder Tektit, oder kristallines Siliciumdioxid, wie beispielsweise α-Quarz, oder Tridymit.

Der Fachmann erkennt, dass das erfindungsgemäße Verfahren somit auf nicht-metallische Siliciumverbindungen als erste Verbindung beschränkt ist. Aus den zur Verfügung stehenden experimentellen Ergebnissen lässt sich nicht ableiten, ob das erfindungsgemäße Verfahren auch für Siliciumverbindungen, in denen das Silicium eine Oxidationszahl von 0 aufweist, wie beispielsweise elementares Silicium, anwendbar wäre. Dies mag vorliegend jedoch auch dahingestellt bleiben, da die Funktionalisierung von Metallen und Halbmetallen eine andere Technologie betrifft und der Einsatz von metallischen SiliciumVerbindungen in Kautschukmischungen ohnehin nicht wünschenswert wäre. Bevorzugt ist somit ein erfindungsgemäßes Verfahren, wobei die Ausgangszusammensetzung im Wesentlichen kein elementares Silicium umfasst.

Die Ausgangszusammensetzung umfasst darüber hinaus eine zweite Verbindung, die ausgewählt ist aus der Gruppe bestehend aus organyloxysilylorganischen Verbindungen. Für den Fachmann im Bereich der Silanisierungsverfahren ist dieser Ausdruck eine präzise Bezeichnung für solche Materialien, die sich für die Silanisierung eignen. Der Wortbestandteil "organyloxysilyl" drückt aus, dass die entsprechende siliciumhaltige Verbindung über zumindest einen organischen Rest verfügt, der über ein Sauerstoffatom an das zentrale Siliciumatom gebunden ist. Der Wortbestandteil "-organischen" stellt klar, dass darüber hinaus auch ein weiterer organischer Rest direkt über ein Kohlenstoffatom an das zentrale Silicium gebunden ist. Der Fachmann versteht, dass es dieser organische Rest ist, der in der herzustellenden organosilanisierten Verbindung an der Grenzschicht der modifizierten ersten Verbindung verbleiben soll, wohingegen es sich bei den Organyloxy-Gruppen um Abgangsgruppen handelt, die im Zuge einer Kondensationsreaktion freigesetzt werden können, bei der Si-O-Si-Verknüpfung erzeugt werden.

Auch wenn prinzipiell organyloxysilylorganische Verbindungen eingesetzt werden können, bei denen drei von vier Resten direkt über ein Kohlenstoffatom an das zentrale Silicium angebunden sind und die entsprechend lediglich über eine Abgangsgruppe verfügen, sind in der Praxis vor allem solche organyloxysilylorganische Verbindungen relevant, die über drei, zumeist gleichartige, Abgangsgruppen verfügen, bei denen es sich zumeist um Ethoxygruppen handelt, welche im Zuge der Reaktion als Ethanol freigesetzt werden.

Beim Einsatz entsprechender Trialkoxy-Verbindungen entstehen bei der Organosilanisierung mit der alkoxysilylorganischen Verbindung durch Kondensation organosilyloxysilicium-Materialien, wobei die alkoxysilylorganischen Komponenten nach der ersten Kondensation mit bis zu zwei weiteren Andockstellen an den ersten Verbindungen reagieren können. Hierbei ist es möglich, dass sämtliche vom zentralen Siliciumatom ausgehenden Si-O-Si-Verknüpfungen zu dem gleichen Partikel erzeugt werden oder dass über die organyloxysilylorganischen Verbindungen eine Verknüpfung zwischen mehreren Partikeln der ersten Verbindung erzeugt wird.

Ein Vorteil des erfindungsgemäßen Verfahrens liegt darin, dass die in der Ausgangszusammensetzung vorgelegten ersten und zweiten Verbindungen im Zuge der mechanischen Beanspruchung in synergistischer Weise automatisch miteinander vermischt werden. Trotzdem kann es insbesondere mit Blick auf die für die vollständige Umsetzung benötigte Zeit vorteilhaft sein, wenn die Ausgangszusammensetzung bereits eine innige Vermischung der beiden Verbindungen darstellt. Entsprechend ist ein erfindungsgemäßes Verfahren bevorzugt, wobei die erste und die zweite Verbindung in der Ausgangszusammensetzung im Wesentlichen homogen miteinander vermischt vorliegen.

Bei der ersten Verbindung handelt es sich naturgemäß um Feststoffe, d.h. um Stoffe, die bei typischen Umgebungsbedingungen, bspw. 20 °C und 1 bar Luftdruck, fest sind. Die zweite Verbindung kann jedoch, in Abhängigkeit von der chemischen Struktur, prinzipiell als Feststoff oder als Flüssigkeit vorliegen. Im Falle einer flüssigen zweiten Verbindung, wird die erste Verbindung zweckmäßig mit der zweiten Verbindung durchfeuchtet bzw. imprägniert. Von einem praktischen Standpunkt aus ist es jedoch besonders effizient, wenn auch die zweite Verbindung in der Ausgangszusammensetzung als Feststoff vorgelegt wird. Tatsächlich kann hierin ein Vorteil des erfindungsgemäßen Verfahrens gesehen werden, da dieses überhaupt erst den effizienten Einsatz von lediglich aus Feststoffen bestehenden Ausgangszusammensetzungen ermöglicht, was aus prozesstechnischer Sicht mit Blick auf die Prozesssicherheit besonders vorteilhaft ist. Somit ist ein erfindungsgemäßes Verfahren bevorzugt, wobei die zweite Verbindung ausgewählt ist aus der Gruppe bestehend aus festen und flüssigen, vorzugsweise festen, organyloxysilylorganischen Verbindungen und/oder wobei der Massenanteil von flüssigen und/oder festen organyloxysilylorganischen Verbindungen in der Ausgangszusammensetzung im Bereich von 5 bis 10 % liegt, bezogen auf die Masse der Ausgangszusammensetzung bzw. bei 5 bis 10 phf, d.h. parts per hundred filler.

Die Ausgangszusammensetzung kann ein Katalysatormaterial umfassen, welches die Silanisierungsreaktion katalysiert, was insbesondere in Abhängigkeit von der Natur der zweiten Verbindung für bestimmte Anwendungen vorteilhaft sein kann. Geeignete Katalysatormaterialien kann der Fachmann dem Stand der Technik entnehmen und wählt diese in Abhängigkeit der von ihm eingesetzten ersten und zweiten Verbindung aus, wobei nach Erkenntnis der Erfinder solche Katalysatormaterialien eingesetzt werden können, die auch für die vergleichbare nasschemische Reaktion geeignet wären. Bevorzugt ist ein erfindungsgemäßes Verfahren, wobei die Ausgangszusammensetzung ein Katalysatormaterial umfasst.

Das erfindungsgemäße Verfahren ist prinzipiell tolerant gegenüber der Anwesenheit von weiteren Zusätzen in der Ausgangszusammensetzung. Die Erfinder haben jedoch festgestellt, dass die Effizienz der mechanochemischen Reaktion abnimmt, wenn die effektive Konzentration der ersten und zweiten Verbindung in der Ausgangszusammensetzung abnimmt. Es wird vermutet, dass dies dadurch bedingt ist, dass die Stoßwahrscheinlichkeit zwischen den Partikeln der beiden Verbindungen hierdurch reduziert wird. Entsprechend sind erfindungsgemäße Verfahren bevorzugt, wobei der kombinierte Massenanteil sämtlicher erster und zweiter Verbindungen in der Ausgangszusammensetzung größer als 60 %, bevorzugt größer als 70 %, besonders bevorzugt größer als 80 %, ganz besonders bevorzugt größer als 90 %, ist, bezogen auf die Masse der Ausgangszusammensetzung.

Im erfindungsgemäßen Verfahren erfolgt ein mechanisches Beanspruchen der Ausgangszusammensetzung in einer Mahlvorrichtung zum Zwecke einer mechanischen Aktivierung der ersten und/oder zweiten Verbindung, bevorzugt beider Verbindungen. Im erfindungsgemäßen Verfahren ist die Mahlvorrichtung eine Fließbett-Gegenstrahlmühle.

Im erfindungsgemäßen Verfahren erfolgt das mechanische Beanspruchen so, dass die Organosilanisierung der ersten Verbindung durch die zweite Verbindung infolge der mechanischen Beanspruchung erfolgt, d.h. ursächlich durch die mechanische Beanspruchung verursacht wird. Eine nasschemische Organosilanisierung, die beispielsweise unter Rühren stattfindet, wäre somit explizit kein Beispiel für eine Reaktion, bei der die Organosilanisierung infolge der mechanischen Beanspruchung erfolgt. Vielmehr ist im erfindungsgemäßen Verfahren die intensive mechanische Beanspruchung der Ausgangszusammensetzung ursächlich für die chemische Reaktion, wodurch funktional ein Mindestenergieeintrag definiert wird, der ausreichend ist, um die Reaktion der ersten mit der zweiten Verbindung auszulösen.

Ohne an diese Theorie gebunden sein zu wollen, gehen die Erfinder davon aus, dass in Mahlvorrichtungen mit Mahlkörpern vor allem die durch den Mahlkörper vermittelte Reibung sowie Stöße bzw. im Fall von Exzenterschwingmühlen im hohen Maße auch die Prallbeanspruchung für die Auslösung der chemischen Reaktion verantwortlich sind. Im Gegensatz hierzu erfolgt das Auslösen der mechanochemischen Reaktion in einer erfindungsgemäß eingesetzten Fließbett-Gegenstrahlmühle wohl vor allem durch das gegenseitige Aufeinanderprallen der Partikel der ersten und zweiten Verbindung, wodurch die notwendige Aktivierungsenergie für eine chemische Reaktion unter Bindungsbruch und Neuknüpfung chemischer Bindungen erreicht wird. Ohne wiederum an diese Theorie gebunden sein zu wollen, wird vermutet, dass der Energieeintrag zur Beanspruchung des Materials führt, woraus Gitterstörungen resultieren, die dann die chemische Reaktion ermöglichen, wobei angenommen wird, dass die mechanische Aktivierung im erfindungsgemäßen Verfahren wahrscheinlich vornehmlich die eingesetzten ersten Verbindungen betrifft. Bevorzugt ist somit ein erfindungsgemäßes Verfahren, wobei die mechanische Aktivierung der ersten und/oder zweiten Verbindung, vorzugsweise der ersten Verbindung, durch Reibung und/oder Prall und/oder Stoß erfolgt.

Der Fachmann ist mit einer Fließbett-Gegenstrahlmühle für das erfindungsgemäße Verfahren vertraut und kann diese in der vorgesehenen Weise bedienen. Hierbei kann der Fachmann die mechanochemische Reaktion, bzw. den Energieeintrag in die Ausgangszusammensetzung, durch die Betriebsparameter der Mahlvorrichtung steuern. Bei Einsatz einer Fließbett-Gegenstrahlmühle gehört zu den Betriebsbedingungen beispielsweise Art, Anzahl und Anordnung der Mahlgasdüsen, der Mahlgasstrom, der Druck des Mahlgases, seine Beschaffenheit sowie die Umdrehungsgeschwindigkeit des für den Produktaustrag eingesetzten Windsichters, die sich u. a. auch auf die Verweilzeit des Reaktionsguts im Fließbett und damit auf die Endfeinheit auswirkt. Darüber hinaus gehört auch die Zugabegeschwindigkeit der Ausgangskomponenten zu den Betriebsparametern.

In dem erfindungsgemäßen Verfahren ist es nicht notwendig, dem System durch eine Temperaturerhöhung zusätzlich thermische Energie zuzuführen, auch wenn dies in bestimmten Szenarien trotzdem sinnvoll sein kann. Bevorzugt ist jedoch aus Gründen der Energieeffizienz ein erfindungsgemäßes Verfahren, wobei sämtliche Schritte des Verfahrens bei Raumtemperatur, d.h. 20 °C, ausgeführt werden, bzw. wobei dem System keine Energie durch externe Heizeinrichtungen zugeführt wird.

Mit der vorliegenden Erfindung ist die Organosilanisierung von Siliciumdioxid und/oder anorganischen Silikaten in einem lösungsmittelfreien Verfahren möglich, wobei vorteilhafterweise vollständig mit festen Ausgangsmaterialien gearbeitet werden kann. Das erfindungsgemäße Verfahren ist dabei besonders energieeffizient und erlaubt den Erhalt von organosilanisierten Verbindungen mit hoher Ausbeute und hoher Selektivität. Das erfindungsgemäße Verfahren kommt vorteilhafterweise ohne den Einsatz zusätzlicher Chemikalien aus und produziert wenig oder sogar gar keine Abfälle bzw. Nebenprodukte. Darüber hinaus ist es mit handelsüblichen Gerätschaften durchführbar und weist entsprechend eine hohe Betriebssicherheit auf.

Obwohl sich das erfindungsgemäße Verfahren in eigenen Versuchen als sehr flexibel hinsichtlich der Auswahl der ersten und zweiten Verbindung erwiesen hat, konnten die Erfinder jedoch eine Gruppe von ersten bzw. zweiten Verbindungen identifizieren, die für den Einsatz im erfindungsgemäßen Verfahren besonders geeignet sind. Bevorzugt ist ein erfindungsgemäßes Verfahren, wobei die erste Verbindung ausgewählt ist aus der Gruppe bestehend aus Silica, gefälltem Silicagel, Silex, Quarzsand, Flintstein, Hornstein, Kieselgur, Diatomeenerde, Cristobalit, Tridymit, Coesit, Stishovit, Melanophlogit, Opal, Moganit, sowie cyclischen und polycyclische Silikaten, wobei die erste Verbindung bevorzugt ausgewählt ist aus der Gruppe bestehend aus Silica, Silicagel, Cristoballit, Silex, Quarzsand, Flintstein, Hornstein, Kieselgur oder Diatomeenerde, wobei die erste Verbindung besonders bevorzugt amorphes Siliciumdioxid ist, wobei die erste Verbindung beispielsweise synthetisch erzeugt oder natürlichen Ursprungs sein kann.

Bevorzugt ist auch ein erfindungsgemäßes Verfahren, wobei die zweite Verbindung eine Struktur der Formel (R¹O)₃SiR² aufweist,
wobei R¹ organische Reste bezeichnet, die in den drei Gruppen unabhängig voneinander ausgewählt sind, vorzugsweise aus der Gruppe bestehend aus linearen oder verzweigten Alkylgruppen mit 1 bis 8 Kohlenstoffatomen, bevorzugt aus linearen Alkylgruppen mit 2 bis 4 Kohlenstoffatomen, wobei die drei organischen Reste R¹ vorzugsweise identisch sind, und
wobei R² einen, vorzugsweise linearen, organischen Rest der Formel (CH₂)ₙY bezeichnet, wobei n eine natürliche Zahl ist und vorzugsweise im Bereich von 1 bis 10, besonders bevorzugt im Bereich von 2 bis 6, liegt, und wobei Y eine funktionelle Gruppe oder ein eine funktionelle Gruppe enthaltendes Strukturelement ist, die vorzugsweise in terminaler Position angeordnet ist und wobei die funktionelle Gruppe vorzugsweise ausgewählt ist aus der Gruppe bestehend aus Alkenyl-Gruppen, Alkinyl-Gruppen, Aryl-Gruppen, Silyl-Gruppen und funktionellen Gruppen enthaltend zumindest ein Atom der 3., 5., 6. oder 7. Hauptgruppe des Periodensystems der chemischen Elemente, bevorzugt ausgewählt ist aus der Gruppe bestehend aus Alkenyl-Gruppen, Alkinyl-Gruppen, Aryl-Gruppen, Silyl-Gruppen, Aldehyd-Gruppen, Säure-Gruppen, aktivierten Säure-Gruppen, Amino-Gruppen, Alkohol-Gruppen, Thiol-Gruppen und Harnstoff-Gruppen, wobei Y vorzugsweise so ausgewählt ist, dass die funktionelle Gruppe mit einer Kohlenstoff-Kohlenstoff-Doppelbindung unter Bindungsknüpfung reagieren kann. Auch wenn Y, wie vorstehend erläutert, ein eine funktionelle Gruppe enthaltendes Strukturelement sein kann, ist es bevorzugt, wenn Y eine funktionelle Gruppe ist, d.h. ausschließlich aus einer funktionellen Gruppe besteht, wobei die zweite Verbindung in diesem Fall besonders bevorzugt ausgewählt ist aus der Gruppe bestehend aus 3-(Triethoxysilyl)propanthiol und 3-(Triethoxysilyl)propylamin.

In Übereinstimmung mit dem Verständnis des Fachmannes kann ein eine funktionelle Gruppe enthaltendes Strukturelement auch mehr als eine der vorstehend definierten funktionellen Gruppen umfassen, die entweder direkt oder über organische Reste miteinander verbunden sein können.

Es ist grundsätzlich möglich, auch organyloxysilylorganische Verbindungen einzusetzen, die über zwei oder mehr Organyloxysilyl-Gruppen verfügen, die über einen organischen Rest miteinander verbunden sind, was insbesondere deshalb für bestimmte Anwendungen bevorzugt sein kann, weil auf diese Weise der Vernetzungsgrad zwischen den ersten Verbindungen bzw. eine mehrzähnige Anbindung des organischen Rests an die erste Verbindung erfolgen kann. In diesen organyloxysilylorganischen Verbindungen umfasst das eine funktionelle Gruppe enthaltende Strukturelement Y neben zumindest einer funktionellen Gruppe auch noch eine oder mehrere weitere Silyl-Gruppen, die üblicherweise ebenfalls über einen organischen Rest an die funktionelle Gruppe angebunden sind. Hierbei können die entsprechenden zweiten Verbindungen auch so ausgelegt werden, dass es, beispielsweise durch eine nachfolgende Reaktion, in dem verbindenden organischen Rest zu einer aufspaltenden Reaktion kommen kann, sodass eine organyloxysilylorganische Verbindung nach der Bindungsspaltung auf der Grenzfläche der organosilanisierten Verbindungen zwei organische Reste hinterlässt. Bevorzugt ist somit ein erfindungsgemäßes Verfahren, wobei die zweite Verbindung eine Struktur der Formel (R¹O)₃Si-(CH₂)ₘ-Z-(CH₂)ᵤ-Si(OR¹)₃ aufweist, wobei m und u natürliche Zahlen sind, die unabhängig voneinander vorzugsweise im Bereich von 1 bis 10, besonders bevorzugt im Bereich von 2 bis 6, liegen, und wobei Z eine funktionelle Gruppe oder ein eine funktionelle Gruppe enthaltendes Strukturelement ist, wie es vorstehend für Y definiert ist. Dabei sind erfindungsgemäße Verfahren besonders bevorzugt, wobei Z eine Disulfid-Gruppe oder zumindest eine Harnstoff-Gruppe, bevorzugt zwei über eine Aryl-Gruppe verbundene Harnstoff-Gruppen, die vorzugsweise in para-Position zueinander angeordnet sind, umfasst, wobei die zweite Verbindung vorzugsweise ausgewählt ist aus der Gruppe bestehend aus Bis[(triethoxysilyl)propyl]disulfid und 1,1'-(1,4-Phenylen)bis(3-(3-(triethoxysilyl)propyl)harnstoff).

In Übereinstimmung mit dem fachmännischen Verständnis kann es zielführend sein, die organyloxysilylorganischen Verbindungen über ihre Fähigkeit zu charakterisieren, mit Hydroxylgruppen bzw. genauer Si-OH-Gruppen, wie sie regelmäßig an der Oberfläche der ersten Verbindungen vorliegen, zu kondensieren. Entsprechend ist ein erfindungsgemäßes Verfahren bevorzugt, wobei die zweite Verbindung ausgewählt ist aus der Gruppe bestehend aus mit Hydroxylgruppen kondensationsfähigen organisch-substituierten Silanen.

Für bestimmte Anwendungen sind nicht-erfindungsgemäße Verfahren bevorzugt, wobei die Mahlvorrichtung eine Mühle mit Mahlkörpern ist, da entsprechende Vorrichtungen in vielen Betrieben bereits verfügbar sind und zumeist besonders leicht zu bedienen und warten sind. In entsprechenden Fällen wird das nicht-erfindungsgemäße Verfahren üblicherweise als diskontinuierliches Verfahren betrieben, was bedeutet, dass die Mahlvorrichtungen mit der Ausgangszusammensetzung beschickt wird, woraufhin die mechanische Beanspruchung der Ausgangszusammensetzung solange erfolgt, bis die Reaktion hinreichend fortgeschritten ist. Bevorzugt ist ein nicht-erfindungsgemäßes Verfahren, wobei die Mahlvorrichtung eine Mühle mit Mahlkörpern ist und das Verfahren bevorzugt als diskontinuierliches Verfahren betrieben wird.

In den Versuchen dabei hat sich gezeigt, dass bei der Verwendung entsprechender Mahlvorrichtungen mit Mahlkörpern zum Erreichen einer hinreichenden Ausbeute an organosilanisierter Verbindung Reaktionszeiten von mehreren Minuten, typischerweise 30 bis 120 Minuten, benötigt werden. Gleichzeitig kommt es in entsprechenden Vorrichtungen jedoch regelmäßig auch zu einer thermischen Belastung der Ausgangszusammensetzung, durch die es, insbesondere bei längerem Betrieb, zur thermischen Zersetzung von Bestandteilen der Ausgangszusammensetzung kommen kann, was unerwünscht ist. Daher wurde ein Zeitfenster identifiziert, mit dem regelmäßig ein besonders guter Kompromiss zwischen Silanisierungsumsatz und thermischer Belastung erreicht wird. Bevorzugt ist entsprechend ein nicht-erfindungsgemäßes Verfahren, wobei das mechanische Beanspruchen in Schritt b) für eine Zeit im Bereich von 15 bis 120 min, bevorzugt 30 bis 60 min, erfolgt.

Als Nachteil der Verwendung von Mühlen mit Mahlkörpern wurde gefunden, dass in Abhängigkeit von dem Material, aus dem die Mühle und die Mahlkörper bestehen, Verunreinigungen in der hergestellten organosilanisierten Verbindung auftreten können, welche durch Abrieb von den Bestandteilen der Mühle verursacht werden. Zur Lösung dieses Problems wird vorgeschlagen, die Mahlvorrichtung aus einem harten oxidischen Material auszuführen, wie beispielsweise Zirkoniumoxid. Bevorzugt ist somit ein nicht-erfindungsgemäßes Verfahren, wobei die Mahlvorrichtung bevorzugt aus einem oxidischen Material besteht, bevorzugt Zirkoniumoxid.

Als besonders vorteilhafte Alternative zu dem Einsatz einer Mühle mit Mahlkörpern haben die Erfinder identifiziert, dass als Mahlvorrichtung erfindungsgemäß eine Fließbett-Gegenstrahlmühle eingesetzt werden kann, wie sie vom Grundprinzip her in der WO 2018 192686 A1 offenbart wird. In entsprechenden Mahlvorrichtungen wird die für die Reaktion benötigte Energie durch einen sich vielfach vollziehenden Zusammenprall der Partikel der ersten und zweiten Verbindung durch die mit hohem Druck erzeugten und sich kreuzenden Fluidstrahlen bereitgestellt. Entsprechende Vorrichtungen funktionieren nach dem Gegenstrahlprinzip und weisen einen Kreuzungsbereich auf, der den Reaktionsraum für die Organosilanisierung bildet.

Ein besonderer Vorteil dieser Ausführungsform des erfindungsgemäßen Verfahrens ist, dass das erfindungsgemäße Verfahren unter Verwendung einer Fließbett-Gegenstrahlmühle als kontinuierliches Verfahren betrieben werden kann, bei dem die erste Verbindung und die zweite Verbindung kontinuierlich zugeführt und die erzeugten organosilanisierten Verbindungen kontinuierlich entnommen werden können. Die Verweilzeit der einzelnen Partikel der Ausgangszusammensetzung im Reaktionsraum ist dabei vergleichsweise kurz, sodass mit diesem Verfahren besonders energieeffizient gearbeitet und vergleichsweise schnell eine erste Teilmenge an Produkt erhalten werden kann. Die Fließbett-Gegenstrahlmühle kann zweckmäßigerweise über eine Mehrzahl von Fluiddüsen verfügen und wird üblicherweise mit einem typischen Prozessgas betrieben.

Weitere Informationen zur Fließbett-Gegenstrahlmühle finden sich beispielsweise auch in Y. Wang, F. Peng, Part. Sci. Technol. 2010, 28, 566-580, Y. Wang, F. Peng, Powder Technology 2011, 214, 269-277, M. X. Zhang, H. Y. Chen, C. P. Yan, L. Y. Lin, Rev. Adv. Mat. Sci. 2013, 33, 77-84, X. Su, Z. Cao, Q. Li, Z. Zhang, J. Adv. Microscopy Res. 2014, 9, 54-57 und X. Su, S. Xu, T. Cai, Guangzhou Huagong 2012, 40, 101-102.

Als Zusammenfassung der vorstehenden Informationen ist für den Fachmann ersichtlich, dass erfindungsgemäße Verfahren bevorzugt als kontinuierliches Verfahren betrieben wird, wobei in der Mahlvorrichtung bevorzugt in einem Kreuzungsbereich der Strahlrichtung mindestens zweier Düsen zusammen mit dem eingebrachten Ausgangszusammensetzung ein Fließbett als Reaktionsraum ausgebildet wird, wobei die Düsen vorzugsweise in einem Winkel im Bereich von 60° und 180° zueinander angeordnet sind.

Ebenso sind erfindungsgemäße Verfahren bevorzugt, wobei die erste und/oder die zweite Verbindung, bevorzugt beide Verbindungen, mittels einer Fördereinrichtung in eine Mahlkammer der Mahlvorrichtung transportiert werden und den Reaktionsraum im Inneren der Mahlkammer im freien Fall erreichen.

Insbesondere sind erfindungsgemäße Verfahren bevorzugt, wobei die mittlere Verweilzeit des Reaktionsguts im Reaktionsraum der Fließbett-Gegenstrahlmühle im Bereich von 1 bis 60 s, bevorzugt 5 bis 40 s, besonders bevorzugt 10 bis 20 s beträgt.

Zudem sind erfindungsgemäße Verfahren bevorzugt, wobei die Fließbett-Gegenstrahlmühle zwei bis sechs, bevorzugt zwei bis vier, Düsen umfasst. Wobei die die Fließbett-Gegenstrahlmühle besonders bevorzugt drei Düsen umfasst, die im Winkel von 120° zueinander angeordnet sind.

Darüber hinaus sind erfindungsgemäße Verfahren bevorzugt, wobei die Fließbett-Gegenstrahlmühle mit einem Gas betrieben wird, welches ausgewählt ist aus der Gruppe bestehend aus Luft, Stickstoff, Argon, Kohlendioxid, Wasserdampf und Mischungen dieser Gase.

Als zusätzliche Vorteile gegenüber anderen Mahlvorrichtungen ist beim Einsatz einer Fließbett-Gegenstrahlmühle anzuführen, dass diese ohne Mahlkörper auskommt, die, wie vorstehend erläutert, durch Abrieb zu einer Verunreinigung der herzustellenden organosilanisierten Verbindung führen können. Darüber hinaus müssen im Mahlraum auch keine zusätzlichen Massen in Bewegung gesetzt werden wie beispielsweise bei einer Kugelmühle, sodass entsprechende Mahlvorrichtungen regelmäßig besonders energieeffizient arbeiten. Zudem arbeitet eine Fließbett-Gegenstrahlmühle regelmäßig ressourcenschonender, da keine abgeriebenen Kugeln als Verschleißteile ersetzt werden müssen. Als besonderer Vorteil dieses Verfahrens hat sich gezeigt, dass durch die geringe Verweilzeit der Partikel der Ausgangszusammensetzung im Reaktionsraum und die inhärente Kühlung durch die Fluidströme ungewollte Temperaturanstiege während der Reaktion zumindest weitgehend verhindert werden können, sodass einer thermischen Zersetzung der in der Ausgangszusammensetzung enthaltenden Bestandteile effizient entgegengewirkt wird. Zudem hat sich gezeigt, dass die Schallemission von Fließbett-Gegenstrahlmühlen im Betrieb üblicherweise so niedrig ist, dass im Gegensatz zu bspw. großtechnischen Kugelmühlen, insbesondere Exzenterschwingmühlen, keine Einhausung zum Zwecke des Schallschutzes notwendig ist und das Verfahren entsprechend auch aus Gründen der Arbeitssicherheit als vorteilhaft anzusehen ist.

In eigenen Experimenten haben die Erfinder der vorliegenden Erfindung dabei Betriebsparameter identifiziert, mit denen sich beim Einsatz einer Fließbett-Gegenstrahlmühle ein besonders gutes Reaktionsergebnis bei gleichzeitig niedrigem Energieaufwand realisieren lässt. Explizit gilt für das erfindungsgemäße Verfahren, dass die Fließbett-Gegenstrahlmühle mit Strömungsgeschwindigkeiten im Bereich von 100 bis 1000 m/s und einem Mahlgasdruck im Bereich von 5 bis 10 bar, vorzugsweise im Bereich von 7 bis 8 bar, betrieben wird.

Als besonders vorteilhaft kann angesehen werden, dass in einem erfindungsgemäßen Verfahren, welches unter Verwendung einer Fließbett-Gegenstrahlmühle durchgeführt wird, die Reaktionsmahlung vollkommen autogen erfolgt, sodass die gesamte Energie zur Produktbildung, inklusive der notwendigen Aktivierungsenergie, ausschließlich durch den Fluidstrahl bereitgestellt wird. Weder muss eine Temperaturerhöhung von außen erfolgen, noch findet eine unkontrollierte Temperaturerhöhung der Ausgangszusammensetzung durch den Mahlprozess statt, der mit den vorstehend beschriebenen Nachteilen verbunden wäre.

Die Erfindung betrifft zudem ein Verfahren zur Herstellung einer Kautschukmischung, umfassend die Schritte des erfindungsgemäßen Verfahrens, zusätzlich umfassend den Schritt:
c) Vermischen der organosilanisierten Verbindung mit zumindest einem Kautschuk zum Erhalt der Kautschukmischung.

Es hat sich als besonders vorteilhaft erwiesen, dass die mit dem erfindungsgemäßen Verfahren hergestellten organosilanisierten Verbindungen ggf. unmittelbar, d.h. ohne weitere Aufbereitung, mit Kautschuk sowie optional weiteren typischen Komponenten von Kautschukmischungen vermischt werden können, um eine Kautschukmischung zu erhalten. Hierbei kann die Wechselwirkung der organosilanisierten Verbindungen mit den übrigen Bestandteilen der Kautschukmischung, bedingt durch die große Einsatzbreite an zweiten Verbindungen, d.h. mittelbar an organischen Funktionalitäten, durch das erfindungsgemäße Verfahren präzise eingestellt werden.

Entsprechend können mit dem erfindungsgemäßen Verfahren Kautschukmischungen hergestellt werden, deren Eigenschaften besonders effizient auf die für die spätere Anwendung benötigten Eigenschaften abgestimmt werden können. Als Kautschuk kommen im Rahmen des bevorzugten erfindungsgemäßen Verfahrens alle typischen Materialien in Frage, die der Fachmann aus dem Bereich der Reifenherstellung kennt, beispielsweise Naturkautschuk oder synthetische Materialien wie Styrol-Butadien-Kautschuk.

Die Erfindung betrifft darüber hinaus ein Verfahren zur Herstellung eines Vulkanisats oder eines Kautschukprodukts umfassend das entsprechende Vulkanisat, umfassend die Schritte des erfindungsgemäßen Verfahrens zur Herstellung einer Kautschukmischung, zusätzlich umfassend den Schritt:
d) Vulkanisieren der Kautschukmischung zum Erhalt des Vulkanisats, und optional den Schritt
e) Verarbeiten des Vulkanisats zu einem Kautschukprodukt, insbesondere einem Fahrzeugluftreifen.

Hierbei wird die mit dem erfindungsgemäßen Verfahren hergestellte Kautschukmischung nach dem in der Reifenindustrie üblichen Verfahren vulkanisiert, beispielsweise durch eine schwefelbasierte Vernetzung.

Im Lichte der vorstehenden Ausführungen ist für den Fachmann ersichtlich, dass vorliegend auch eine Zusammensetzung umfassend mindestens eine organosilanisierte Verbindung, hergestellt oder herstellbar mit einem erfindungsgemäßen Verfahren, eine Kautschukmischung, umfassend eine entsprechende Zusammensetzung, ein Vulkanisat, hergestellt oder herstellbar durch Vulkanisation dieser Kautschukmischung sowie ein Kautschukprodukt, vorzugsweise ein Fahrzeugluftreifen, umfassend das entsprechende Vulkanisat offenbart werden.

Abschließend betrifft die vorliegende Erfindung auch die Verwendung einer Fließbett-Gegenstrahlmühle zur energieeffizienten, lösungsmittelfreien Organosilanisierung einer ersten Verbindung ausgewählt aus der Gruppe bestehend aus Siliciumdioxid und anorganischen Silikaten, mit einer zweiten Verbindung, ausgewählt aus der Gruppe bestehend aus organyloxysilylorganischen Verbindungen, wobei infolge der mechanischen Beanspruchung eine Organosilanisierung der ersten Verbindung durch die zweite Verbindung erfolgt, dadurch gekennzeichnet, dass die Fließbett-Gegenstrahlmühle mit Strömungsgeschwindigkeiten im Bereich von 100 bis 1000 m/s und einem Mahlgasdruck im Bereich von 5 bis 10 bar betrieben wird.

Die Vorteile der entsprechenden Verwendung, die aus dem Stand der Technik noch nicht bekannt war, ergibt sich aus den vorstehenden Ausführungen.

Nachfolgend wird die Erfindung anhand von Ausführungsbeispielen und vergleichenden Berechnungen näher erläutert.

### Berechnungen zum Energieverbrauch:

Da das erfindungsgemäße Verfahren nicht erfordert, dass Lösungsmittel aus dem erhaltenen Produkt entfernt werden und zudem ohne den Einsatz von erhöhten Temperaturen und/oder reduzierten Drücken auskommt, ist das erfindungsgemäße Verfahren gegenüber den aus dem Stand der Technik bekannten nasschemischen Silanisierungsverfahren energieeffizienter.

Die Erfinder haben jedoch erkannt, dass sich im erfindungsgemäßen Verfahren eine besonders energieeffiziente Ausgestaltung realisieren lässt, wenn als Mahlvorrichtung eine Fließbett-Gegenstrahlmühle verwendet wird. Hierfür wird nachfolgend ein Vergleich zwischen einer beispielhaften Exzenterschwingmühle ESM 504 (Vergleichsbeispiel) und einer solchen Fließbett-Gegenstrahlmühle des Typs AFG 630/1 (erfindungsgemäßes Beispiel) vollzogen.

Die Exzenterschwingmühle, welche mit stählernen Mahlkörpern des Typs Cylpeps 32mm x 32mm betrieben wird, hat bei diskontinuierlicher Verfahrensweise einen Durchsatz von etwa 40 kg/h. Der Mischer bzw. der Antrieb benötigen eine Leistung von 27,5 kW, wobei der Feinsichter weitere 5,5 kW benötigt. Dadurch ergibt sich ein spezifischer Energieaufwand berechnet als kWh/t von etwa 825 kWh/t. Für die Fließbett-Gegenstrahlmühle wird nach ISO 1217 bei einem Betriebsdruck von 8 bar und einer Temperatur von 20 °C mit einem Luftstrom von 3000 m³/h kalkuliert. Die hierfür benötigte Kompressorleistung beträgt etwa 270 kW. Hinzu kommt die Leistung des Sichterrads mit etwa 11 kW. Die entsprechende Vorrichtung ermöglicht einen kontinuierlichen Durchsatz von etwa 600 kg/h. Hieraus resultiert ein spezifischer Energieaufwand als kWh/t in Höhe von etwa 468 kWh/t.

Die vorstehende Kalkulation an einem Praxisbeispiel verdeutlicht, dass der spezifische Energieaufwand für das erfindungsgemäße Verfahren, in welchem eine Fließbett-Gegenstrahlmühle als Mahlvorrichtung eingesetzt wird, deutlich unter dem Energieaufwand liegt, der mit einer Exzenterschwingmühle benötigt wird.

### Ausführungsbeispiele

### Ausführungsbeispiel 1:

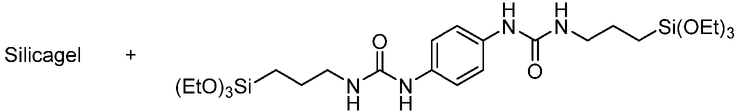

In einer Gefäßschwingmühle MM400 (Retsch) werden 3,751 g Silicagel und 0,343 g 1,1'-(1,4-Phenylen)bis(3-(3-(triethoxysilyl)propyl)harnstoff), synonym: 1,4-Bis{N'-[3-(triethoxysilyl)propyl]ureido}benzol, [CAS Nr. 668994-10-3] für die Dauer von 60 min gemeinsam vermahlen. Als Mahlkörper werden Stahlkugeln von 9 mm Durchmesser eingesetzt. Nach der angegebenen Dauer der Reaktionsmahlung wird das Silanisierungsprodukt von den Mahlkörpern durch Siebung abgetrennt.

### Ausführungsbeispiel 2:

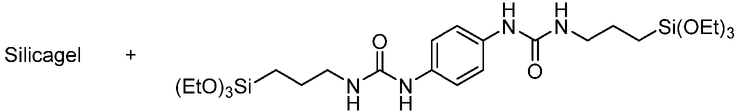

In einer Zentrifugalmühle S1 (Retsch) werden 5,75 g Silicagel und 0,53 g 1,1'-(1,4-Phenylen)bis(3-(3-(triethoxysilyl)propyl)harnstoff), synonym: 1,4-Bis{N'-[3-(triethoxysilyl)propyl]ureido}benzol, [CAS Nr. 668994-10-3] für die Dauer von 30 min gemeinsam vermahlen. Als Mahlkörper werden Stahlkugeln von 10 mm Durchmesser eingesetzt. Nach der angegebenen Dauer der Reaktionsmahlung wird das Silanisierungsprodukt von den Mahlkörpern durch Siebung abgetrennt.

### Ausführungsbeispiel 3:

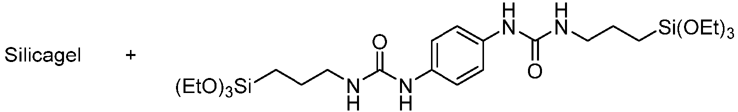

In einer Exzenterschwingmühle (Siebtechnik GSM) werden 30,0 g Silicagel und 2,74 g 1,1'-(1,4-Phenylen)bis(3-(3-(triethoxysilyl)propyl)harnstoff), synonym: 1,4-Bis{N'-[3-(triethoxysilyl)propyl]ureido}benzol, [CAS Nr. 668994-10-3] für die Dauer von 120 min gemeinsam vermahlen. Als Mahlkörper werden Stahl- oder Zirkoniumdioxidkugeln von 10 mm Durchmesser eingesetzt. Das Material des Mahlgefäßes wird dementsprechend angepasst. Nach der angegebenen Dauer der Reaktionsmahlung wird das Silanisierungsprodukt von den Mahlkörpern durch Siebung abgetrennt.

### Ausführungsbeispiel 4:

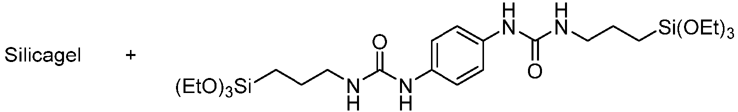

In einer Fließbett-Gegenstrahlmühle PicoJet (Alpine-Hosokawa) werden bei einem Mahlgasdruck von 8,5 bar und einer Sichterumdrehungsgeschwindigkeit von 60.000 UPM 33,3 g Silicagel und 3,05 g 1,1'-(1,4-Phenylen)bis(3-(3-(triethoxysilyl)propyl)harnstoff), synonym: 1,4-Bis{N'-[3-(triethoxysilyl)propyl]ureido}benzol, [CAS Nr. 668994-10-3] einer Reaktionsmahlung unterzogen. Das Silanisierungsprodukt wird im Zuge der kontinuierlichen Reaktion in einem nachgeschalteten Produktfilter aufgefangen.

### Ausführungsbeispiel 5:

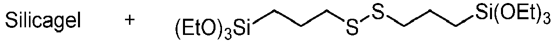

In einer Gefäßschwingmühle MM400 (Retsch) werden 3.751 g Silicagel und 0.270 g Bis[(triethoxysilyl)propyl]disulfid, synonym: 4,4,13,13-Tetraethoxy-3,14-dioxa-8,9-dithia-4,13-disilahexadecan, TESPD [CAS Nr. 56706-10-6] für die Dauer von 90 min gemeinsam vermahlen. Als Mahlkörper werden Stahlkugeln von 9 mm Durchmesser eingesetzt. Nach der angegebenen Dauer der Reaktionsmahlung wird das SilanisierungsProdukt von den Mahlkörpern durch Siebung abgetrennt.

### Ausführungsbeispiel 6:

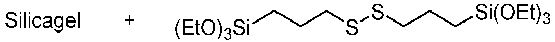

In einer Exzenterschwingmühle (Siebtechnik GSM) werden 30,0 g Silicagel und 2,16 g Bis[(triethoxysilyl)propyl]disulfid, synonym: 4,4,13,13-Tetraethoxy-3,14-dioxa-8,9-dithia-4,13-disilahexadecan, TESPD [CAS Nr. 56706-10-6] für die Dauer von 120 min gemeinsam vermahlen. Als Mahlkörper werden Stahl- oder Zirkoniumdioxidkugeln von 10 mm Durchmesser eingesetzt. Das Material des Mahlgefäßes wird dementsprechend angepasst. Nach der angegebenen Dauer der Reaktionsmahlung wird das Silanisierungsprodukt von den Mahlkörpern durch Siebung abgetrennt.

### Ausführungsbeispiel 7:

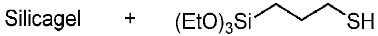

In einer Gefäßschwingmühle MM400 (Retsch) werden 3,751 g Silicagel und 0,271 g 3-(Triethoxysilyl)propanthiol, synonym: (3-Mercaptopropyl)triethoxysilan [CAS Nr. 14814-09-6] für die Dauer von 30 min gemeinsam vermahlen. Als Mahlkörper werden Stahlkugeln von 9 mm Durchmesser eingesetzt. Nach der angegebenen Dauer der Reaktionsmahlung wird das Silanisierungsprodukt von den Mahlkörpern durch Siebung abgetrennt.

### Ausführungsbeispiel 8:

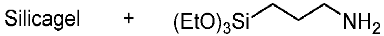

In einer Gefäßschwingmühle MM400 (Retsch) werden 3,751 g Silicagel und 0,252 g 3-(Triethoxysilyl)propylamin, synonym: 3-Aminopropyltriethoxysilane [CAS Nr. 919-30-2] für die Dauer von 20 min gemeinsam vermahlen. Als Mahlkörper werden Stahlkugeln von 9 mm Durchmesser eingesetzt. Nach der angegebenen Dauer der Reaktionsmahlung wird das Silanisierungsprodukt von den Mahlkörpern durch Siebung abgetrennt.

### Ausführungsbeispiel 9:

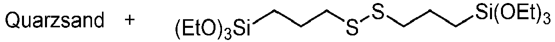

In einer Gefäßschwingmühle MM400 (Retsch) werden 3,751 g handelsüblicher Quarzsand der Körnung 0,075 - 0,090 mm und 0,270 g Bis[(triethoxysilyl)propyl]disulfid, synonym: 4,4,13,13-Tetraethoxy-3,14-dioxa-8,9-dithia-4,13-disilahexadecan, TESPD [CAS Nr. 56706-10-6] für die Dauer von 60 min gemeinsam vermahlen. Als Mahlkörper werden Stahlkugeln von 12,7 mm Durchmesser eingesetzt. Nach der angegebenen Dauer der Reaktionsmahlung wird das Silanisierungsprodukt von den Mahlkörpern durch Siebung abgetrennt.

### Ausführungsbeispiel 10:

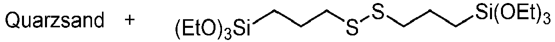

In einer Zentrifugalmühle S1 (Retsch) werden 11,50 g handelsüblicher Quarzsand der Körnung 0,09 - 0.20 mm und 0.82 g Bis[(triethoxysilyl)propyl]disulfid, synonym: 4,4,13,13-Tetraethoxy-3,14-dioxa-8,9-dithia-4,13-disilahexadecan, TESPD [CAS Nr. 56706-10-6] für die Dauer von 30 min gemeinsam vermahlen. Als Mahlkörper werden Stahlkugeln von 10 mm Durchmesser eingesetzt. Nach der angegebenen Dauer der Reaktionsmahlung wird das Silanisierungsprodukt von den Mahlkörpern durch Siebung abgetrennt.

### Ausführungsbeispiel 11:

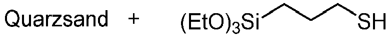

In einer Gefäßschwingmühle MM400 (Retsch) werden 3,751 g handelsüblicher Quarzsand der Körnung 0,075 - 0,090 mm und 0,271 g 3-(Triethoxysilyl)propanthiol, synonym: (3-Mercaptopropyl) triethoxysilan [CAS Nr. 14814-09-6] für die Dauer von 45 min gemeinsam vermahlen. Als Mahlkörper werden Stahlkugeln von 12,7 mm Durchmesser eingesetzt. Nach der angegebenen Dauer der Reaktionsmahlung wird das Silanisierungsprodukt von den Mahlkörpern durch Siebung abgetrennt.

### Ausführungsbeispiel 12:

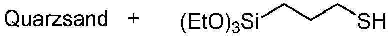

In einer Gefäßschwingmühle MM400 (Retsch) werden 3,751 g handelsüblicher Quarzsand der Körnung 0,09 - 0,20 mm und 0,271 g 3-(Triethoxysilyl)propanthiol, synonym: (3-Mercaptopropyl)triethoxysilan [CAS Nr. 14814-09-6] für die Dauer von 45 min gemeinsam vermahlen. Als Mahlkörper werden Stahlkugeln von 12,7 mm Durchmesser eingesetzt. Nach der angegebenen Dauer der Reaktionsmahlung wird das Silanisierungsprodukt von den Mahlkörpern durch Siebung abgetrennt.

### Auswertung:

Die quantitative Anbindung des jeweiligen organischen Silans an das siliciumhaltige Ausgangsmaterial wird für sämtliche der in den Ausführungsbeispielen 1 bis 12 erhaltenen Silanisierungsprodukte durch eine NMR-spektroskopische Analyse (¹H-NMR, 600 MHz) belegt.

### Weitere Umsetzung:

Die in den Ausführungsbeispielen 1 bis 12 erhaltenen Silanisierungsprodukte, wobei Ausführungsbeispiel 4 erfindungsgemäß ist, wurden in weiteren Test in typischen Kautschukmischungen (z.B. umfassend Naturkautschuk, SSBR, Weichmacher, Schwefel und weiter gebräuchliche Additive) eingesetzt und mit diesen vulkanisiert, wodurch die grundsätzliche Eignung der erhaltenen Silanisierungsprodukte belegt werden konnte.

## Patentansprüche

1. Verfahren zur Organosilanisierung von Siliciumdioxid und/oder anorganischen Silikaten, umfassend die Schritte:
a) Herstellen oder Bereitstellen einer Ausgangszusammensetzung umfassend
zumindest eine erste Verbindung, ausgewählt aus der Gruppe bestehend aus Siliciumdioxid und anorganischen Silikaten, sowie
zumindest eine zweite Verbindung, ausgewählt aus der Gruppe bestehend aus organyloxysilylorganischen Verbindungen,
und
b) mechanisches Beanspruchen der Ausgangszusammensetzung in einer Mahlvorrichtung zur mechanischen Aktivierung der ersten und/oder zweiten Verbindung,
wobei das mechanische Beanspruchen so erfolgt, dass infolge der mechanischen Beanspruchung eine Organosilanisierung der ersten Verbindung durch die zweite Verbindung erfolgt, so dass eine organosilanisierte Verbindung erhalten wird, wobei die Mahlvorrichtung eine Fließbett-Gegenstrahlmühle ist,
**dadurch gekennzeichnet, dass** die Fließbett-Gegenstrahlmühle mit Strömungsgeschwindigkeiten im Bereich von 100 bis 1000 m/s und einem Mahlgasdruck im Bereich von 5 bis 10 bar betrieben wird.

2. Verfahren nach Anspruch 1, wobei die erste Verbindung ausgewählt ist aus der Gruppe bestehend aus Silica, gefälltem Silicagel, Silex, Quarzsand, Flintstein, Hornstein, Kieselgur, Diatomeenerde, Cristobalit, Tridymit, Coesit, Stishovit, Melanophlogit, Opal, Moganit, sowie cyclischen und polycyclische Silikaten, wobei die erste Verbindung bevorzugt ausgewählt ist aus der Gruppe bestehend aus Silica, Silicagel, Cristoballit, Silex, Quarzsand, Flintstein, Hornstein, Kieselgur oder Diatomeenerde, wobei die erste Verbindung besonders bevorzugt ein amorphes Siliciumdioxid ist.

3. Verfahren nach einem der Ansprüche 1 oder 2, wobei die zweite Verbindung eine Struktur der Formel (R¹O)₃SiR² aufweist,
wobei R¹ organische Reste bezeichnet, die unabhängig voneinander ausgewählt sind, vorzugsweise aus der Gruppe bestehend aus linearen oder verzweigten Alkylgruppen mit 1 bis 8 Kohlenstoffatomen, bevorzugt aus linearen Alkylgruppen mit 2 bis 4 Kohlenstoffatomen, wobei die drei organischen Reste vorzugsweise identisch sind, und
wobei R² einen, vorzugsweise linearen, organischen Rest der Formel (CH₂)ₙY bezeichnet, wobei n eine natürliche Zahl ist und vorzugsweise im Bereich von 1 bis 10, besonders bevorzugt im Bereich von 2 bis 6, liegt, und wobei Y eine funktionelle Gruppe oder ein eine funktionelle Gruppe enthaltendes Strukturelement ist, die vorzugsweise in terminaler Position angeordnet ist und wobei die funktionelle Gruppe vorzugsweise ausgewählt ist aus der Gruppe bestehend aus Alkenyl-Gruppen, Alkinyl-Gruppen, Aryl-Gruppen, Silyl-Gruppen und funktionellen Gruppen enthaltend zumindest ein Atom der 3., 5., 6. oder 7. Hauptgruppe des Periodensystems der chemischen Elemente, bevorzugt ausgewählt ist aus der Gruppe bestehend aus Alkenyl-Gruppen, Alkinyl-Gruppen, Aryl-Gruppen, Silyl-Gruppen, Aldehyd-Gruppen, Säure-Gruppen, aktivierten Säure-Gruppen, Amino-Gruppen, Alkohol-Gruppen, Thiol-Gruppen und Harnstoff-Gruppen.

4. Verfahren nach einem der Ansprüche 1 bis 3, wobei das Verfahren als kontinuierliches Verfahren betrieben wird, wobei in der Mahlvorrichtung bevorzugt in einem Kreuzungsbereich der Strahlrichtung mindestens zweier Düsen zusammen mit der eingebrachten Ausgangszusammensetzung ein Fließbett als Reaktionsraum ausgebildet wird, wobei die Düsen vorzugsweise in einem Winkel im Bereich von 60° und 180° zueinander angeordnet sind.

5. Verfahren nach Anspruch 4, wobei die Fließbett-Gegenstrahlmühle mit einem Mahlgasdruck im Bereich von 7 bis 8 bar betrieben wird.

6. Verfahren nach einem der Ansprüche 4 oder 5, wobei die erste und/oder die zweite Verbindung, bevorzugt beide Verbindungen, mittels einer Fördereinrichtung in eine Mahlkammer der Mahlvorrichtung transportiert werden und den Reaktionsraum im Inneren der Mahlkammer im freien Fall erreichen.

7. Verfahren zur Herstellung einer Kautschukmischung, umfassend die Schritte des Verfahrens nach einem der Ansprüche 1 bis 6, zusätzlich umfassend den Schritt:
c) Vermischen der organosilanisierten Verbindung mit zumindest einem Kautschuk zum Erhalt der Kautschukmischung.

8. Verfahren zur Herstellung eines Vulkanisats oder Kautschukprodukts umfassend das Vulkanisat, umfassend die Schritte des Verfahrens nach Anspruch 7, zusätzlich umfassend den Schritt:
d) Vulkanisieren der Kautschukmischung zum Erhalt des Vulkanisats
und optional den Schritt
e) Verarbeiten des Vulkanisats zu einem Kautschukprodukt, insbesondere einem Fahrzeugluftreifen.

9. Verwendung einer Fließbett-Gegenstrahlmühle zur energieeffizienten, lösungsmittelfreien Organosilanisierung einer ersten Verbindung ausgewählt aus der Gruppe bestehend aus Siliciumdioxid und anorganischen Silikaten, mit einer zweiten Verbindung, ausgewählt aus der Gruppe bestehend aus organyloxysilylorganischen Verbindungen, wobei infolge der mechanischen Beanspruchung eine Organosilanisierung der ersten Verbindung durch die zweite Verbindung erfolgt, **dadurch gekennzeichnet, dass** die Fließbett-Gegenstrahlmühle mit Strömungsgeschwindigkeiten im Bereich von 100 bis 1000 m/s und einem Mahlgasdruck im Bereich von 5 bis 10 bar betrieben wird.

## Claims

1. Process for organosilanization of silicon dioxide and/or inorganic silicates, comprising the steps of:
a) producing or providing a starting composition comprising
at least a first compound selected from the group consisting of silicon dioxide and inorganic silicates and
at least a second compound selected from the group consisting of organyloxysilylorganic compounds,
and
b) mechanically stressing the starting composition in a milling apparatus for mechanical activation of the first and/or second compound,
wherein the mechanical stressing is carried out such that the mechanical stressing results in organosilanization of the first compound by the second compound, to obtain an organosilanized compound, wherein the milling apparatus is a fluidized-bed opposed-jet mill,
**characterized in that** the fluidized-bed opposed-jet mill is operated with flow velocities in the range from 100 to 1000 m/s and a milling gas pressure in the range from 5 to 10 bar.

2. Process according to Claim 1, wherein the first compound is selected from the group consisting of silica, precipitated silica gel, silex, silica sand, flintstone, chert, kieselguhr, diatomaceous earth, cristobalite, tridymite, coesite, stishovite, melanophlogite, opal, moganite, and cyclic and polycyclic silicates, wherein the first compound is preferably selected from the group consisting of silica, silica gel, cristobalite, silex, silica sand, flintstone, chert, kieselguhr or diatomaceous earth, wherein the first compound is more preferably an amorphous silicon dioxide.

3. Process according to either of Claims 1 and 2, wherein the second compound has a structure of formula (R¹O)₃SiR²,
wherein R¹ denotes organic radicals selected independently of one another, preferably from the group consisting of linear or branched alkyl groups having 1 to 8 carbon atoms, preferably of linear alkyl groups having 2 to 4 carbon atoms, wherein the three organic radicals are preferably identical, and
wherein R² denotes a preferably linear organic radical of formula (CH₂)ₙY, wherein n is a natural number and is preferably in the range from 1 to 10, more preferably in the range from 2 to 6, and wherein Y is a functional group or a structural element containing a functional group which is preferably arranged in the terminal position and wherein the functional group is preferably selected from the group consisting of alkenyl groups, alkynyl groups, aryl groups, silyl groups and functional groups containing at least one atom of main group 3, 5, 6 or 7 of the Periodic Table of the Chemical Elements, preferably selected from the group consisting of alkenyl groups, alkynyl groups, aryl groups, silyl groups, aldehyde groups, acid groups, activated acid groups, amino groups, alcohol groups, thiol groups and urea groups.

4. Process according to any of Claims 1 to 3, wherein the process is operated as a continuous process, wherein a fluidized bed is configured as a reaction space in the milling apparatus preferably in a region of intersection in the jet direction of at least two nozzles together with the introduced starting composition, wherein the nozzles are arranged preferably at an angle in the range of 60° and 180° to one another.

5. Process according to Claim 4, wherein the fluidized-bed opposed-jet mill is operated with a milling gas pressure in the range from 7 to 8 bar.

6. Process according to either of Claims 4 and 5, wherein the first and/or the second compound, preferably both compounds, are transported by means of a conveying device into a milling chamber of the milling apparatus and reach the reaction space in the interior of the milling chamber in free fall.

7. Process for producing a rubber mixture, comprising the steps of the process according to any of Claims 1 to 6, additionally comprising the step of:
c) mixing the organosilanized compound with at least one rubber to obtain the rubber mixture.

8. Process for producing a vulcanizate or rubber product comprising the vulcanizate, comprising the steps of the process according to Claim 7, additionally comprising the step of:
d) vulcanizing the rubber mixture to obtain the vulcanizate and optionally the step of
e) processing the vulcanizate to give a rubber product, in particular a pneumatic vehicle tyre.

9. Use of a fluidized-bed opposed-jet mill for energy-efficient, solvent-free organosilanization of a first compound selected from the group consisting of silicon dioxide and inorganic silicates, with a second compound selected from the group consisting of organyloxysilylorganic compounds, wherein the mechanical stressing results in organosilanization of the first compound by the second compound, **characterized in that** the fluidized-bed opposed-jet mill is operated with flow velocities in the range from 100 to 1000 m/s and a milling gas pressure in the range from 5 to 10 bar.

## Revendications

1. Procédé d'organosilanisation de dioxyde de silicium et/ou de silicates inorganiques, comprenant les étapes :
a) préparation ou mise à disposition d'une composition de départ comprenant au moins un premier composé, choisi dans le groupe constitué par le dioxyde de silicium et les silicates inorganiques, ainsi que
au moins un deuxième composé, choisi dans le groupe constitué par les composés organyloxysilylorganiques,
et
b) sollicitation mécanique de la composition de départ dans un dispositif de broyage pour l'activation du premier et/ou du deuxième composé,
dans lequel la sollicitation mécanique a lieu de telle sorte que, suite à la sollicitation mécanique, une organosilanisation du premier composé par le deuxième composé a lieu, de telle sorte qu'un composé organosilanisé est obtenu, le dispositif de broyage étant un broyeur à contre-jets à lit fluidisé,
**caractérisé en ce que** le broyeur à contre-jets à lit fluidisé fonctionne à des vitesses d'écoulement dans la plage de 100 à 1000 m/s et à une pression du gaz de broyage dans la plage de 5 à 10 bars.

2. Procédé selon la revendication 1, dans lequel le premier composé est choisi dans le groupe constitué par la silice, le silicagel précipité, le silex, le sable de quartz, les galets de silex, le chert, le kieselgur, la terre de diatomées, la cristobalite, la tridymite, la coésite, la stishovite, la mélanophlogite, l'opale, la moganite, ainsi que les silicates cycliques et polycycliques, le premier composé étant de préférence choisi dans le groupe constitué par la silice, le silicagel, la cristobalite, le silex, le sable de quartz, les galets de silex, le chert, le kieselgur ou la terre de diatomées, le premier composé étant de manière particulièrement préférée un dioxyde de silicium amorphe.

3. Procédé selon l'une des revendications 1 ou 2, le deuxième composé présentant une structure de formule (R¹O)₃SiR²,
R¹ désignant des radicaux organiques qui sont choisis, indépendamment les uns des autres, de préférence dans le groupe constitué par les groupes alkyle linéaire ou ramifié comprenant 1 à 8 atomes de carbone, de préférence les groupes alkyle linéaire comprenant 2 à 4 atomes de carbone, les trois radicaux organiques étant de préférence identiques et
R² désignant un radical organique de préférence linéaire de formule (CH₂)ₙY, n étant un nombre naturel et se situant de préférence dans la plage de 1 à 10, de manière particulièrement préférée dans la plage de 2 à 6, et Y étant un groupe fonctionnel ou un élément structural contenant un groupe fonctionnel, qui est de préférence disposé en position terminale et le groupe fonctionnel étant de préférence choisi dans le groupe constitué par les groupes alcényle, alcynyle, aryle, silyle et les groupes fonctionnels contenant au moins un atome du 3e, 5e, 6e ou 7e groupe principal du système périodique des éléments chimiques, de préférence choisi dans le groupe constitué par les groupes alcényle, alcynyle, aryle, silyle, aldéhyde, acides, acides activés, amino, alcool, thiol et urée.

4. Procédé selon l'une des revendications 1 à 3, le procédé fonctionnant comme un procédé continu, un lit fluidisé étant formé en tant qu'espace de réaction dans le dispositif de broyage, de préférence dans une zone de croisement de la direction de pulvérisation d'au moins deux buses conjointement avec la composition de départ introduite, les buses étant de préférence disposées selon un angle dans la plage de 60° à 180° l'une par rapport à l'autre.

5. Procédé selon la revendication 4, le broyeur à contre-jets à lit fluidisé fonctionnant à une pression du gaz de broyage dans la plage de 7 à 8 bars.

6. Procédé selon l'une des revendications 4 ou 5, dans lequel le premier et/ou le deuxième composé, de préférence les deux composés, est/sont transporté(s) au moyen d'un dispositif de transport dans une chambre de broyage du dispositif de broyage et atteigne(nt) l'espace de réaction à l'intérieur de la chambre de broyage en chute libre.

7. Procédé de préparation d'un mélange de caoutchouc comprenant les étapes du procédé selon l'une des revendications 1 à 6, comprenant en plus l'étape :
c) mélange du composé organosilanisé avec au moins un caoutchouc pour l'obtention du mélange de caoutchouc.

8. Procédé de préparation d'un produit vulcanisé ou d'un produit du caoutchouc comprenant le produit vulcanisé, comprenant les étapes du procédé selon la revendication 7, comprenant en plus l'étape :
d) vulcanisation du mélange de caoutchouc pour l'obtention du produit vulcanisé
et éventuellement l'étape
e) transformation du produit vulcanisé en un produit de caoutchouc, en particulier un pneu de véhicule.

9. Utilisation d'un broyeur à contre-jets à lit fluidisé pour l'organosilanisation efficace en énergie, sans solvant, d'un premier composé choisi dans le groupe constitué par le dioxyde de silicium et les silicates inorganiques, avec un deuxième composé, choisi dans le groupe constitué par les composés organyloxysilylorganiques, dans lequel, suite à la sollicitation mécanique, une organosilanisation du premier composé par le deuxième composé à lieu, **caractérisé en ce que** le broyeur à contre-jets à lit fluidisé fonctionne à des vitesses d'écoulement dans la plage de 100 à 1000 m/s et à une pression du gaz de broyage dans la plage de 5 à 10 bars.
